# EUROPEAN PATENT SPECIFICATION

(11) **EP 4 572 942 B1**
(45) Date of publication and mention of the grant of the patent: **15.04.2026**
(21) Application number: 23754307.9
(22) Date of filing: 09.08.2023
(51) Int. Cl.: B29C 64/118, B29C 64/314, B33Y 10/00, B33Y 30/00, B33Y 40/00, B33Y 70/00, B29L 31/00

(54) **A METHOD FOR PRINTING A 3D OBJECT USING MATERIAL SHAPED FROM A SHEET**
VERFAHREN ZUM DRUCKEN EINES 3D-OBJEKTS UNTER VERWENDUNG VON MATERIAL, DAS AUS EINER FOLIE GEFORMT WURDE
MÉTHODE D'IMPRESSION D'UN OBJET EN TROIS DIMENSIONS À AVEC UN MATÉRIAU FORMÉ À PARTIR D'UNE FEUILLE

(30) Priority: 19.08.2022 EP 22191228; 09.09.2022 EP 22194790
(43) Date of publication of application: 25.06.2025
(73) Proprietor: Signify Holding B.V., 5656 AE Eindhoven (NL)
(72) Inventor: HIKMET, Rifat, Ata, Mustafa, 5656 AE Eindhoven (NL); VAN BOMMEL, Ties, 5656 AE Eindhoven (NL)
(74) Representative: Verweij, Petronella Daniëlle
(86) International application number: PCT/EP2023/072019
(87) International publication number: WO 2024/037941

(56) References cited:
- EP-A1- 2 483 059
- US-A1- 2016 297 104

## Description

### TECHNICAL FIELD

The present invention relates to a method for manufacturing a 3D item. Further, the invention relates to a 3D printable material for use in such a method, and a lighting device comprising such a 3D item obtainable by such a method. Further, the invention relates to a 3D printer for use in such a method.

### BACKGROUND

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals, and polymers.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, e.g. for thermoplastics, the filament is melted and extruded before being laid down. In general, FDM printers use a thermoplastic filament, which is heated to its melting point and then extruded, layer by layer, or in fact filament after filament to create a three-dimensional object. FDM printers are relatively fast, low cost and can be used for printing complicated 3D objects. Such printers are used in printing various shapes using various polymers. The technique is also being further developed in the production of LED luminaires and lighting solutions. The nozzle of an FDM printer is normally fed with filaments having a constant diameter a constant speed in order to obtain a constant rate of material flow out of the nozzle.

However, it is rather costly to produce a filament with a constant diameter. For this reason, the price of filaments used in FDM printers is considerably higher than the price of the raw polymer material. Furthermore, the tolerance of shape variations of currently available filaments needs to be improved for minimizing undesirable visual defects in printed objects. Furthermore, diameter variations of the filament make drying process more difficult.

Therefore, there is a need to provide a method for manufacturing a 3D item wherein the cost and performance of 3D printable filament is improved.

EP 2483059 discloses a ribbon liquefier for use in an extrusion-based digital manufacturing system having a drive mechanism and a heat transfer component. The ribbon liquefier includes an outer liquefier portion configured to receive thermal energy from the heat transfer component, and a channel at least partially defined by the outer liquefier portion. The channel has dimensions that are configured to receive a ribbon filament, wherein the ribbon liquefier is configured to melt the ribbon filament received in the channel to at least an extrudable state with the received thermal energy to provide a melt flow. The ribbon element may be shaped into a flexed state.

### SUMMARY

Considering the above, the present invention provides such a method for manufacturing a 3D item by means of fused deposition modelling. The method of the present invention comprises the steps of:
a) providing a 3D printable material in the form of at least one elongated strip having a first longitudinal extension, a first transverse extension being substantially perpendicular to the first longitudinal extension and a first height being substantially perpendicular to the first longitudinal extension and the first transverse extension, the 3D printable material comprising at least one thermoplastic polymer;
b) shaping, by means of at least one of twisting and rolling around an axis parallel to the first longitudinal extension (L1), the at least one elongated strip into a 3D printable filament having a second longitudinal extension, a second transverse extension being substantially perpendicular to the second longitudinal extension and a second height in the direction being substantially perpendicular to the second longitudinal extension and the second transverse extension;
c) feeding the 3D printable filament to a printer head of a 3D printer;
d) melting the 3D printable filament in the printer head of the 3D printer; and
e) layer-wise depositing the 3D printable material to provide the 3D item comprising a plurality of layers of 3D printed material.

As a currently not claimed alternative to twisting and/or rolling, an elongated strip may also be shaped into a 3D printable filament by means of bending and/or folding around an axis parallel to the first longitudinal extension (L1).

According to the present invention, 3D printable sheet material may be used for providing a 3D printable filament. The sheet material can be produced at high speed with high thickness accuracy. The sheet material may than be cut into strips. The first height, i.e the first thickness T1, of the sheet material may be from 1 µm to 1 mm. Such thin strips can be dried very fast, thus adding to the time- and cost-efficiency of the method. The term "plurality" means two or more. In particular, the 3D item may comprise at least three layers, preferably at least five layers, more preferably at least ten layers.

The term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. The 3D printed material may be printed as a filament and deposited as such. The 3D printable material may be provided as filament or may be formed into a filament. Hence, whatever starting materials are applied, a filament comprising 3D printable material is provided by the printer head and 3D printed. The term "extrudate" may be used to define the 3D printable material downstream of the printer head, but not yet deposited. The latter is indicated as "3D printed material". In fact, the extrudate comprises 3D printable material, as the material is not yet deposited. Upon deposition of the 3D printable material or extrudate, the material is thus indicated as 3D printed material. Normally, the 3D printable material, the extrudate and 3D printed material are the same material, as the material upstream of the printer head, downstream of the printer head, and when deposited, is substantially the same material.

The term "elongated" is in the context of the present invention intended to mean that the first longitudinal extension, i.e. the first length L1, of the strip, is substantially greater than the first transverse extension, i.e. the first width W1, of the strip. In particular, the aspect ratio (AR), defined as L/W, of each elongated strip may have a value of from 2 to 10.

The first longitudinal extension of the at least one elongated strip may be in the range from 10 cm to 1000 m, preferably from 20 cm to 30 cm. The first transverse extension of the at least one elongated strip may be in the range from 1 mm to 4 cm, preferably from 5 mm to 2 cm.

As mentioned above, the 3D printable material comprises at least one thermoplastic polymer. In general, the thermoplastic polymers have a glass transition temperature Tg and/or a melting temperature Tm. The 3D printable material will be heated by the 3D printer before it leaves the nozzle to a temperature of at least the glass transition temperature, and in general at least the melting temperature. Hence, the printer head action may comprise heating the 3D printable material above the glass transition, or above the melting temperature. It should be noted that melting occurs when the polymer chains fall out of their crystal structures and become a disordered liquid, while glass transition is a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being higher than the former. The glass transition temperature and the melting point may e.g. be determined with differential scanning calorimetry.

As mentioned above, the 3D printable sheet material may be produced at high speed with high thickness accuracy. Further, since the 3D printable sheet material generally has a thickness being significantly lower compared to the thickness of a 3D printable filament, the drying time is reduced, thus adding to time- and cost-efficiency of the 3D printing process. The at least one elongated strip of the 3D printable material used in step a) of the method according to the present invention may be obtained by cutting a 3D printable sheet material into strips.

As mentioned above, during step b) the at least one elongated strip is shaped into a 3D printable filament having a second longitudinal extension, i.e. a second length L2, a second transverse extension, i.e. a second width W2 being substantially perpendicular to the second longitudinal extension L2 and a second height, i.e. a second thickness T2 in the direction being substantially perpendicular to the second longitudinal extension and the second transverse extension. The second height T2 is greater that the first height T1. In other words, during step b), the at least one elongated strip of material is shaped such that the thickness of the 3D printable filament is greater than the thickness of the strip.

By the term "shaping" is in the context of the present invention understood at least one of twisting, rolling, bending and folding.

In particular, the at least one elongated strip may be twisted into a helix. In such an embodiment, the first length L1 and the first width W1 of the at least one elongated strip will be greater than the second length L2, and the second width W2 of the 3D printable filament.

Alternatively, or additionally, the at least one elongated strip may be rolled along the longitudinal axis such that a tubular 3D printable filament comprising a coiled wall is formed. In such an embodiment, the first length L1 and the first width W1 of the at least one elongated strip will be greater than the second length L2 and the second width W2 of the 3D printable filament.

According to yet another embodiment, the at least one elongated strip may be rolled along the longitudinal axis such that a tubular 3D printable filament comprising a straight wall is formed. In such an embodiment, the first length L1 of the at least one elongated strip will be the same as the second length L2 of the 3D printable filament, while the first width W1 of the at least one elongated strip will be greater than the second width W2 of the 3D printable filament.

After step b), the second longitudinal extension L2 of the 3D printable filament may be in the range from 10 cm to 1000 m, preferably from 10 cm to 100 m. Further, the second transverse extension W2 of the 3D printable filament may be in the range from 1 mm to 5 mm, and the second height W2 of the 3D printable filament may be in the range from 1 mm to 5 mm. It should be noted that the second height W2 denotes the diameter of the tubular 3D printable filament, the thickness of the helical 3D printable filament or the thickness of the 3D filament in the form of a folded strip, depending on the nature of shaping in step b).

In particular, the second width W2 may be equal to the second thickness T2.

The 3D printable material according to the present invention may comprise at least a first layer and a second layer, wherein the second layer is arranged on top of or beside the first layer. The first layer may comprise a first thermoplastic polymer and the second layer may comprise a second thermoplastic polymer being different from the first thermoplastic polymer. Such an embodiment offers the advantage of enabling manufacturing 3D items having a complex layer structure. The first thermoplastic polymer and/or the second thermoplastic polymer may be a single material or may be a combination of two or more materials.

The first layer may have a property being different from a property of the second layer. For instance, the first layer may comprise a first additive, and the second layer may comprise a second additive being different from the first additive. The first and/or the second additive may be particles or pigment. The layers will melt and mix in the nozzle of the 3D printer, which allows for great variation possibilities provided by the method of the present invention.

The 3D printable material may comprise a plurality of layers, wherein each layer may have different properties.

The first layer may comprise first particles and the second layer may comprise second particles being different from the first particles.

The first and/or second particles may be selected from the group consisting of light scattering particles, light reflective particles, light conversion particles, light absorbing particles, thermally conductive particles. The light scattering particles may be BaSO₄, Al₂O₃ and/or TiO₂ particles. Light conversion particles may be phosphor particles including different phosphor particles. Light reflective particles may include but not limited to flakes and/or glitters. Examples of flakes are silver and/or aluminium flakes. Examples of glitters are PET foil cut parts which may have one or more coatings/layers. Examples of light absorbing particles include graphite particles. Thermally conductive particles are particles with a high conductivity such as for example copper particles.

In particular, the property may be colour. Alternatively, or additionally, the property may be reflection or permeability for different gases and liquids.

The 3D printable material may be reinforced by e.g. arranging at least one layer of woven fibres.

The elongated strip may have a first edge and a second edge, the first edge being opposite to the second edge along the first longitudinal extension. The method of the present invention may comprise a step b') of adhering said first edge to said second edge, wherein step b') occurs before step c). The adhering may be performed by application of an adhesive material or by heating the 3D printable filament. If step b') is present, the obtained 3D printable filament has an improved structural integrity.

The method according to the present invention may further comprise a step a') of drying the at least one elongated strip, wherein step a') occurs before or simultaneously with step a). Drying may be performed at elevated temperature, e.g in an oven or by exposure to hot air. Alternatively, or additionally, drying may be performed by exposure to IR light. It should be noted that at least one of steps a'), b) and b') may be performed in the 3D printer. Such an embodiment offers the advantage of a simplified and cost-efficient production process, since the above-mentioned steps may be performed in-line.

As already mentioned, the method of the present invention may further comprise a step a") of providing a sheet comprising 3D printable material, and cutting the sheet thus providing at least one elongated strip of the 3D printable material, wherein step a") occurs before step a). Such an embodiment offers the advantage of facilitated transport and handling of the 3D printable material prior to step a).

The present invention further relates to a 3D printable filament for manufacturing a 3D item by means of fused deposition modelling, wherein the 3D printable filament is manufactured by the method according to the above. The 3D printable filament according to the present invention may be used in a conventional manner for manufacturing of a 3D item.

The present invention further relates to a 3D printer for manufacturing a 3D item by executing the method described above, the 3D printer comprising a tool for performing step b). Such a tool may be a shaping element for shaping the at least one elongated strip into a 3D printable filament. If present, the shaping element is arranged upstream from the printer head, such that the at least one elongated strip passes through the shaping element and is formed into a 3D printable filament prior to feeding through the printer head. As mentioned above, thin elongated strips may thus be used, thus significantly reducing the drying time and increasing manufacturing accuracy.

The shaping element may be a rotatable guiding plate comprising an aperture for receiving the plurality of elongated strips. The elongated strip is fed through the aperture of the guiding plate, and the rotational movement of the guiding plate twists the elongated strip thus forming a 3D printable filament.

As mentioned above, the 3D printable material may include additives, to a volume percentage of at maximum about 60 vol.%, especially at maximum about 30 vol.%, such as at maximum 20 vol.% of the additives relative to the total volume of the thermoplastic material and additives.

The at least one additive may be selected from a group consisting of antioxidants, heat stabilizers, light stabilizers, ultraviolet light stabilizers, ultraviolet light absorbing additives, near infrared light absorbing additives, infrared light absorbing additives, plasticizers, lubricants, release agents, antistatic agents, anti-fog agents, antimicrobial agents, colorants, laser marking additives, surface effect additives, radiation stabilizers, flame retardants, and anti-drip agents. The additive may have useful properties selected from optical properties, electrical properties, thermal properties, and mechanical properties.

The printable material is printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform. Instead of the term "receiver item" also the term "substrate" may be used. Therefore, the phrase "printing on a substrate" and similar phrases include amongst others directly printing on the substrate, or printing on a coating on the substrate or printing on 3D printed material earlier printed on the substrate.

Layer by layer printable material is deposited, by which the 3D item is generated during the printing stage. The 3D item may show a characteristic ribbed structure originating from the deposited filaments. However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, cross-linking, etc. Post-processing may include smoothening the ribbed structures, which may lead to an essentially smooth surface. Post-processing may include cross-linking of the thermoplastic material. This may result in fewer or no thermoplastic properties of the material.

The 3D item manufactured by the method described above may comprise a plurality of layers on top of each other, i.e. stacked layers. The width W_{L} and height H_{L} of individually 3D printed layers may e.g. in embodiments be selected from the range of 100 - 5000 µm, such as 200-2500 µm, with the height in general being smaller than the width. For instance, the ratio of height and width may be equal to or smaller than 0.8, such as equal to or smaller than 0.6. It should be noted that the layer width W_{L} and/or layer height H_{L} of each layer may be same as or different from the layer width W_{L} and/or layer height H_{L} of the other layers. The 3D item may comprise at least 5 layers, like at least 8 layers, such as at least 10 layers.

Finally, the present invention relates to a lighting device comprising a 3D item manufactured by the method described above. The lighting device further comprises a light source providing light source light. The 3D item may be a housing and/or optical component. Part of the light source light may be transmitted and/or reflected by the 3D item. The lighting device may be a luminaire and/or a lamp.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 depicts 3D printable material in the form of an elongated strip;
Figs. 1A, 1B and 1C schematically depict a twisted 3D printable filament according to the present invention;
Fig. 2 illustrates a rolled 3D printable filament having a coiled wall;
Fig. 3 shows a rolled 3D printable filament having a straight wall;
Fig. 4 depicts a 3D printable filament comprising a plurality of layers;
Fig. 5 illustrates a reinforced 3D printable filament;
Fig. 6 depicts step b') of the method according to the present invention;
Fig. 7 illustrates a printer head of a 3D printer for use in the method of the present invention.

All the figures are schematic, not necessarily to scale, and generally only show parts which are necessary in order to elucidate embodiments of the present invention, wherein other parts may be omitted or merely suggested.

### DETAILED DESCRIPTION OF THE INVENTION

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments of the present invention are provided by way of example. In the drawings, identical reference numerals denote the same or similar components having a same or similar function, unless specifically stated otherwise.

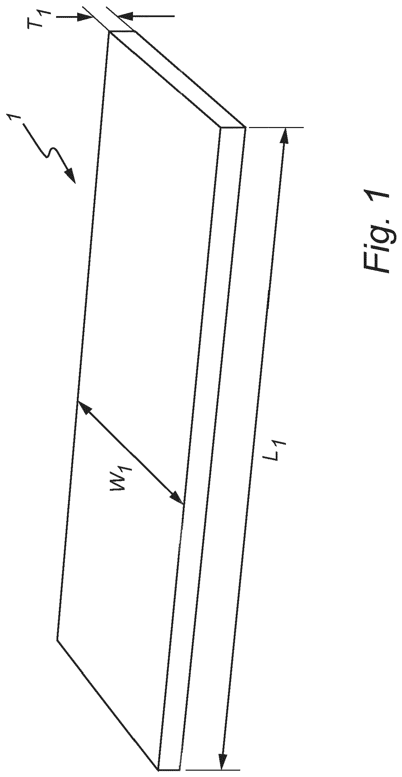

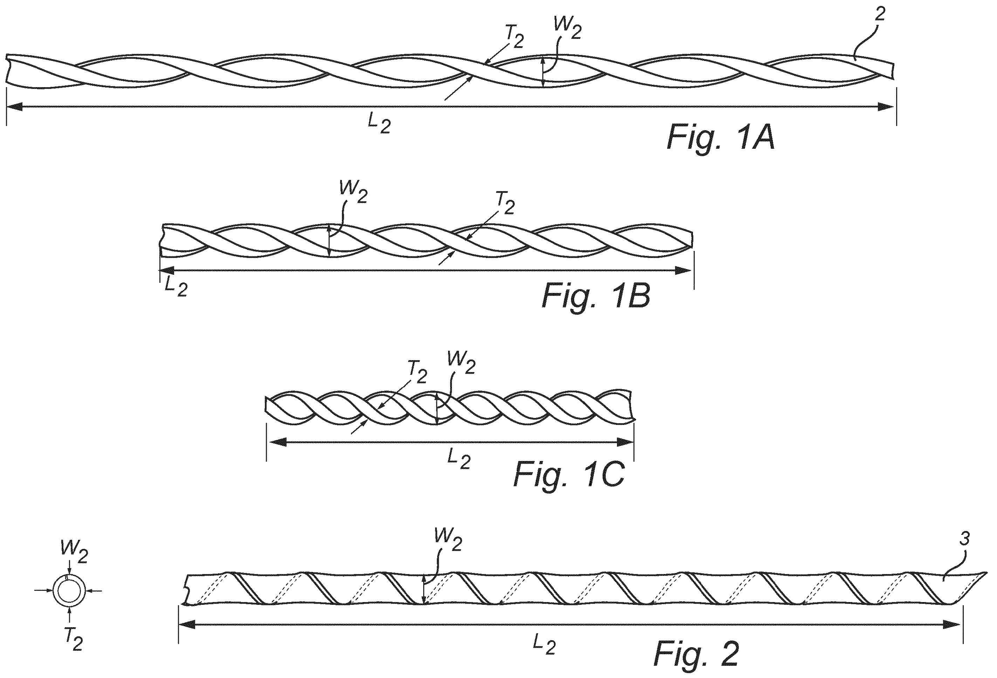

Fig. 1 shows a 3D printable material 1 in the form of one elongated strip having a first longitudinal extension L1, a first transverse extension W1 being substantially perpendicular to the first longitudinal extension L1 and a first height T1 in the direction being substantially perpendicular to the first longitudinal extension L1 and the first transverse extension W1, the 3D printable material comprising at least one thermoplastic polymer.

Figs. 1A-1C illustrate different embodiments of a twisted 3D printable filament 2. As may be seen, the first longitudinal extension L1 of the elongated strip 1 is greater than the second longitudinal extension L2 of the 3D printable filament 2. Further, the second longitudinal extension L2 of the 3D printable filament depends on the amount of twists per unit length of the elongated strip 1. As clearly seen in Figs. 1A-1C, the longitudinal extension of the 3D filament decreases with increased amount of twists per unit length.

Fig. 2 illustrates a rolled tubular 3D printable filament 3 comprising a coiled wall. In such an embodiment, the first length L1 and the first width W1 of the elongated strip 1 will be greater than the second length L2 and the second width W2 of the 3D printable filament 3. Further, the second width W2 is equal to the second thickness T2.

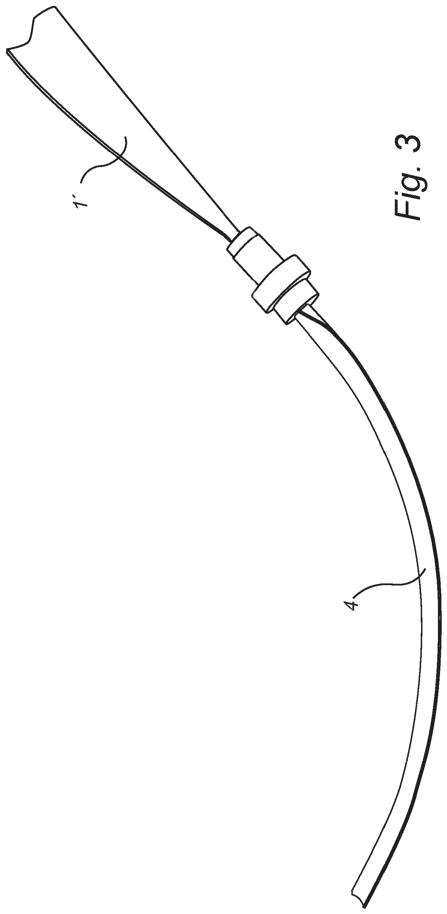

Fig. 3 depicts a tubular 3D printable filament 4 comprising a straight wall. In such an embodiment, the first length L1 of the at least one elongated strip 1 will be the same as the second length L2 of the 3D printable filament 4, while the first width W1 of the at least one elongated strip 1 will be greater than the second width W2 of the 3D printable filament 4.

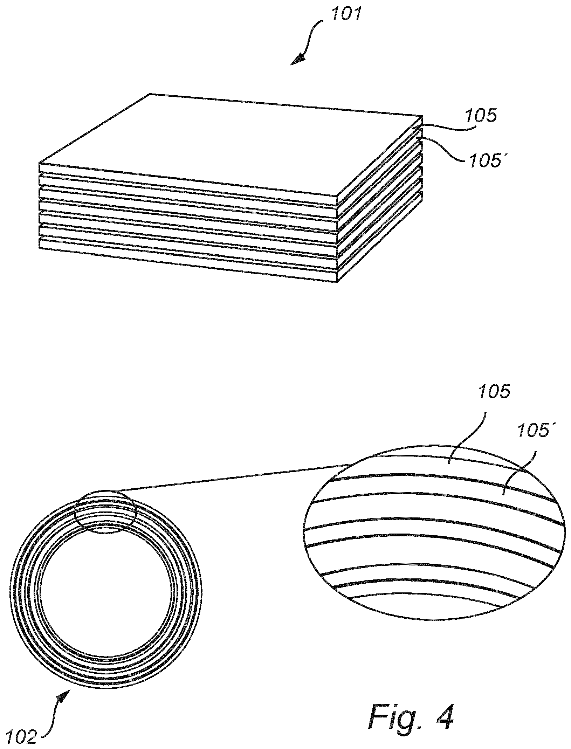

Fig. 4 illustrates the 3D printable material 101 comprising a plurality of layers, wherein the layers are arranged on top of each other. As mentioned above, the first layer may comprise a first thermoplastic polymer and the second layer may comprise a second thermoplastic polymer being different from the first thermoplastic polymer. Such an embodiment offers the advantage of enabling manufacturing 3D items having a complex layer structure. The first thermoplastic polymer and/or the second thermoplastic polymer may be a single material or may be a combination of two or more materials.

The first layer may have a property being different from a property of the second layer. For instance, the first layer may comprise a first additive, and the second layer may comprise a second additive being different from the first additive. The first and/or the second additive may be particles or pigment. The layers will melt and mix in the nozzle of the 3D printer, which allows for great variation possibilities provided by the method of the present invention.

The first layer may comprise first particles and the second layer may comprise second particles being different from the first particles.

The first and/or second particles may be selected from the group consisting of light scattering particles, light reflective particles, light conversion particles, light absorbing particles, thermally conductive particles. The light scattering particles may be BaSO₄, Al₂O₃ and/or TiO₂ particles. Light conversion particles may be phosphor particles including different phosphor particles. Light reflective particles may include but not limited to flakes and/or glitters. Examples of flakes are silver and/or aluminium flakes. Examples of glitters are PET foil cut parts which may have one or more coatings/layers. Examples of light absorbing particles include graphite particles. Thermally conductive particles are particles with a high conductivity such as for example copper particles.

In particular, the property may be colour. Alternatively, or additionally, the property may be reflection or permeability for different gases and liquids.

When the 3D printable material 101 is rolled into the 3D printable filament 102, the layers will be arranged as shown in Fig. 4. Such an embodiment offers the advantage of providing a 3D item having a wide variety of properties.

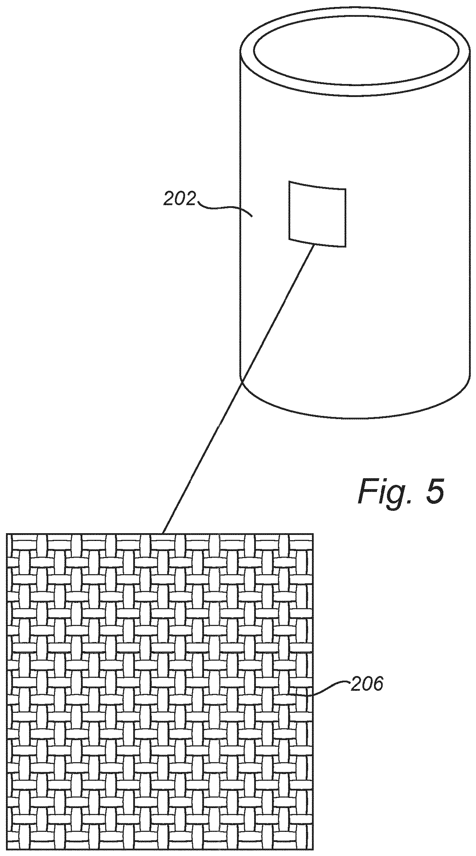

The 3D printable material 202 may be reinforced by e.g. arranging at least one layer of woven fibers 206, as shown in Fig. 5.

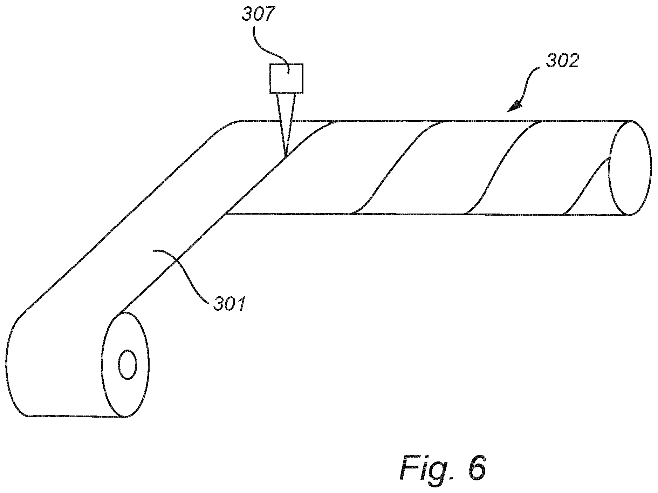

As mentioned above, the method of the present invention may comprise a step b') of adhering the 3D printable filament, wherein step b') occurs before step c). Such a step is depicted in Fig. 6, wherein the elongated strip 301 is rolled into a tubular 3D printable filament 302 having coiled wall. The edges of the 3D filament 302 are glued by the adhesive 307.

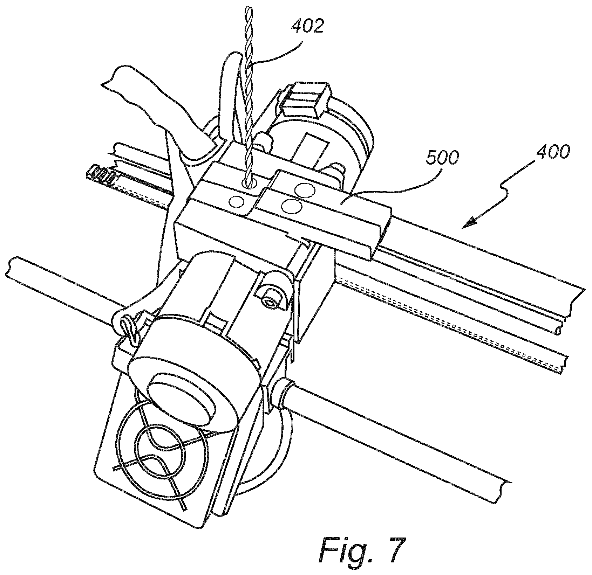

Fig. 7 illustrates a 3D printer 400 for manufacturing a 3D item by means of fused deposition modelling, the 3D printer comprising a printer head 500 for receiving a 3D printable filament 402.

Although the present invention has been described with reference to various embodiments, those skilled in the art will recognize that changes may be made without departing from the scope of the invention. It is intended that the detailed description be regarded as illustrative and that the appended claims define the scope of the invention. While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A method for manufacturing a 3D item by means of fused deposition modelling, said method comprising the steps of:
a) providing a 3D printable material in the form of at least one elongated strip (1) having a first longitudinal extension (L1), a first transverse extension (W1) being substantially perpendicular to said first longitudinal extension (L1) and a first height (T1) being substantially perpendicular to said first longitudinal extension (L1) and said first transverse extension (W1), said 3D printable material comprising at least one thermoplastic polymer;
b) shaping, by means of at least one of twisting and rolling around an axis parallel to the first longitudinal extension (L1), said at least one elongated strip (1) into a 3D printable filament (2) having a second longitudinal extension (L2), a second transverse extension (W2) being substantially perpendicular to said second longitudinal extension (L2) and a second height (T2) being substantially perpendicular to said second longitudinal extension (L2) and said second transverse extension (W2);
c) feeding said 3D printable filament (2) to a printer head (500) of a 3D printer (400);
d) melting said 3D printable filament in said printer head (500) of said 3D printer (400); and
e) layer-wise depositing said 3D printable material to provide said 3D item comprising a plurality of layers of 3D printed material.

2. The method according to claim 1, wherein said 3D printable material comprises at least a first layer (105) and a second layer (105'), wherein said second layer (105') is arranged on top of or beside said first layer (105).

3. The method according to claim 2, wherein said first layer (105) comprises a first thermoplastic polymer and said second layer comprises a second thermoplastic polymer being different from said first thermoplastic polymer.

4. The method according to any one of the preceding claims, wherein said step b) is twisting, and wherein said 3D printable filament (2) is a helix.

5. The method according to any one of the preceding claims, wherein said 3D printable filament (2) is a tube.

6. The method according to claim 5, wherein the elongated strip (1) has a first edge and a second edge, the first edge being opposite to the second edge along the first longitudinal extension (L1), said method further comprising a step b') of adhering said first edge to said second edge, wherein step b') occurs before step c).

7. The method according to any one of the preceding claims, wherein said method further comprises step a') of drying said at least one elongated strip (1), wherein said step a') occurs before or simultaneously with step a).

8. The method according to any one of the preceding claims, wherein said method further comprises step a") of providing a sheet comprising 3D printable material, and cutting said sheet thus providing at least one elongated strip (1) of said 3D printable material, wherein step a") occurs before step a).

9. The method according to any one of the preceding claims, wherein said first longitudinal extension (L1) of said at least one elongated strip (1) is in the range from 10 cm to 100 m, said first transverse extension (W1) of said at least one elongated strip (1) is in the range from 1 mm to 4 cm, and said first height (T1) of said at least one elongated strip (1) is equal to or below 1 mm.

10. The method according to any one of the preceding claims, wherein said second longitudinal extension (L2) of said 3D printable filament (2) is in the range from 10 cm to 100 m, said second transverse extension (W2) of said 3D printable filament (2) is in the range from 1 mm to 5 mm, and second height (T2) of said 3D printable filament is in the range from 1 mm to 5 mm.

11. A 3D printable filament (2) for manufacturing a 3D item by means of fused deposition modelling, said 3D printable filament comprising a 3D printable material in the form of at least one elongated strip (1) having a first longitudinal extension (L1), a first transverse extension (W1) being substantially perpendicular to said first longitudinal extension (L1) and a first height (T1) being substantially perpendicular to said first longitudinal extension (L1) and said first transverse extension (W1), said 3D printable material comprising at least one thermoplastic polymer;
wherein said 3D printable material has been shaped, by means of at least one of twisting and rolling around an axis parallel to the first longitudinal extension (L1), and wherein said 3D printable filament has a second longitudinal extension (L2), a second transverse extension (W2) being substantially perpendicular to said second longitudinal extension (L2) and a second height (T2) being substantially perpendicular to said second longitudinal extension (L2) and said second transverse extension (W2).

12. A 3D printer (400) for manufacturing a 3D item by executing the method of any one of claims 1-10, said 3D printer (400) comprising a tool for performing step b).

13. A 3D item manufactured by the method according to any one of claims 1-10.

14. A lighting device comprising a 3D item according to claim 13 and a light source (000) for providing light source light.

## Patentansprüche

1. Verfahren zum Herstellen eines 3D-Gegenstands mittels Schmelzschichtung, das Verfahren umfassend die Schritte:
a) Bereitstellen eines 3D-druckbaren Materials in der Form von mindestens einem länglichen Streifen (1), der eine erste Längserstreckung (L1), eine erste Quererstreckung (W1), die im Wesentlichen senkrecht zu der ersten Längserstreckung (L1) ist, und eine erste Höhe (T1) aufweist, die im Wesentlichen senkrecht zu der ersten Längserstreckung (L1) und der ersten Quererstreckung (W1) ist, wobei das 3D-druckbare Material mindestens ein thermoplastisches Polymer umfasst;
b) Formen, mittels mindestens einem von einem Verdrehen und einem Rollen um eine Achse herum parallel zu der ersten Längserstreckung (L1), des mindestens einen länglichen Streifens (1) zu einem 3D-druckbaren Filament (2), das eine zweite Längserstreckung (L2), eine zweite Quererstreckung (W2), die im Wesentlichen senkrecht zu der zweiten Längserstreckung (L2) ist, und eine zweite Höhe (T2) aufweist, die im Wesentlichen senkrecht zu der zweiten Längserstreckung (L2) und der zweiten Quererstreckung (W2) ist;
c) Zuführen des 3D-druckbaren Filaments (2) zu einem Druckerkopf (500) eines 3D-Druckers (400);
d) Schmelzen des 3D-druckbaren Filaments in dem Druckerkopf (500) des 3D-Druckers (400); und
e) schichtweises Abscheiden des 3D-druckbaren Materials, um den 3D-Gegenstand bereitzustellen, umfassend eine Vielzahl von Schichten aus 3D-gedrucktem Material.

2. Verfahren nach Anspruch 1, wobei das 3D-druckbare Material mindestens eine erste Schicht (105) und eine zweite Schicht (105') umfasst, wobei die zweite Schicht (105') auf oder neben der ersten Schicht (105) angeordnet ist.

3. Verfahren nach Anspruch 2, wobei die erste Schicht (105) ein erstes thermoplastisches Polymer umfasst und die zweite Schicht ein zweites thermoplastisches Polymer umfasst, das sich von dem ersten thermoplastischen Polymer unterscheidet.

4. Verfahren nach einem der vorstehenden Ansprüche, wobei der Schritt b) das Verdrehen ist, und wobei das 3D-druckbare Filament (2) eine Helix ist.

5. Verfahren nach einem der vorstehenden Ansprüche, wobei das 3D-druckbare Filament (2) ein Rohr ist.

6. Verfahren nach Anspruch 5, wobei der längliche Streifen (1) eine erste Kante und eine zweite Kante aufweist, wobei die erste Kante der zweiten Kante entlang der ersten Längserstreckung (L1) gegenüberliegt, das Verfahren ferner umfassend einen Schritt b') eines Anhaftens der ersten Kante an die zweite Kante, wobei Schritt b') vor Schritt c) erfolgt.

7. Verfahren nach einem der vorstehenden Ansprüche, wobei das Verfahren ferner Schritt a') eines Trocknens des mindestens einen länglichen Streifens (1) umfasst, wobei der Schritt a') vor oder gleichzeitig mit Schritt a) erfolgt.

8. Verfahren nach einem der vorstehenden Ansprüche, wobei das Verfahren ferner Schritt a") des Bereitstellens einer Schicht umfassend 3D-druckbares Material und eines Schneidens der Schicht umfasst, wodurch mindestens ein länglicher Streifen (1) des 3D-druckbaren Materials bereitgestellt wird, wobei Schritt a") vor Schritt a) erfolgt.

9. Verfahren nach einem der vorstehenden Ansprüche, wobei die erste Längserstreckung (L1) des mindestens einen länglichen Streifens (1) in dem Bereich von 10 cm bis 100 m liegt, die erste Quererstreckung (W1) des mindestens einen länglichen Streifens (1) in dem Bereich von 1 mm bis 4 cm liegt und die erste Höhe (T1) des mindestens einen länglichen Streifens (1) gleich oder kleiner als 1 mm ist.

10. Verfahren nach einem der vorstehenden Ansprüche, wobei die zweite Längserstreckung (L2) des 3D-druckbaren Filaments (2) in dem Bereich von 10 cm bis 100 m liegt, die zweite Quererstreckung (W2) des 3D-druckbaren Filaments (2) in dem Bereich von 1 mm bis 5 mm liegt und die zweite Höhe (T2) des 3D-druckbaren Filaments in dem Bereich von 1 mm bis 5 mm liegt.

11. 3D-druckbares Filament (2) zum Herstellen eines 3D-Gegenstands mittels Schmelzschichtung, wobei das 3D-druckbare Filament ein 3D-druckbares Material in der Form mindestens eines länglichen Streifens (1) umfasst, der eine erste Längserstreckung (L1), eine erste Quererstreckung (W1), die im Wesentlichen senkrecht zu der ersten Längserstreckung (L1) ist, und eine erste Höhe (T1) aufweist, die im Wesentlichen senkrecht zu der ersten Längserstreckung (L1) und der ersten Quererstreckung (W1) ist, das 3D-druckbare Material umfassend mindestens ein thermoplastisches Polymer;
wobei das 3D-druckbare Material mittels mindestens einem von dem Verdrehen und dem Rollen um eine Achse herum parallel zu der ersten Längserstreckung (L1) geformt wurde, und wobei das 3D-druckbare Filament eine zweite Längserstreckung (L2), eine zweite Quererstreckung (W2), die im Wesentlichen senkrecht zu der zweiten Längserstreckung (L2) ist, und eine zweite Höhe (T2) aufweist, die im Wesentlichen senkrecht zu der zweiten Längserstreckung (L2) und der zweiten Quererstreckung (W2) ist.

12. 3D-Drucker (400) zum Herstellen eines 3D-Gegenstands durch ein Ausführen des Verfahrens nach einem der Ansprüche 1 bis 10, der 3D-Drucker (400) umfassend ein Werkzeug zum Durchführen von Schritt b).

13. 3D-Gegenstand, der durch das Verfahren nach einem der Ansprüche 1 bis 10 hergestellt wird.

14. Beleuchtungsvorrichtung, umfassend einen 3D-Gegenstand nach Anspruch 13 und eine Lichtquelle (000) zum Bereitstellen von Lichtquellenlicht.

## Revendications

1. Procédé permettant de fabriquer un article en 3D au moyen d'une modélisation par dépôt en fusion, le procédé comprenant les étapes consistant à :
a) fournir un matériau imprimable en 3D sous la forme d'au moins une bande allongée (1) ayant une première extension longitudinale (L1), une première extension transversale (W1) étant sensiblement perpendiculaire à ladite première extension longitudinale (L1) et une première hauteur (T1) étant sensiblement perpendiculaire à ladite première extension longitudinale (L1) et à ladite première extension transversale (W1), ledit matériau imprimable en 3D comprenant au moins un polymère thermoplastique ;
b) façonner, au moyen d'au moins l'un parmi une torsion et un enroulement autour d'un axe parallèle à la première extension longitudinale (L1), ladite au moins une bande allongée (1) en un filament imprimable en 3D (2) ayant une seconde extension longitudinale (L2), une seconde extension transversale (W2) étant sensiblement perpendiculaire à ladite seconde extension longitudinale (L2) et une seconde hauteur (T2) étant sensiblement perpendiculaire à ladite seconde extension longitudinale (L2) et à ladite seconde extension transversale (W2) ;
c) alimenter ledit filament imprimable en 3D (2) dans une tête d'imprimante (500) d'une imprimante 3D (400) ;
d) faire fondre ledit filament imprimable en 3D dans ladite tête d'imprimante (500) de ladite imprimante 3D (400) ; et
e) déposer par couches ledit matériau imprimable en 3D pour fournir ledit article en 3D comprenant une pluralité de couches de matériau imprimé en 3D.

2. Procédé selon la revendication 1, dans lequel ledit matériau imprimable en 3D comprend au moins une première couche (105) et une seconde couche (105'), dans lequel ladite seconde couche (105') est agencée au-dessus ou à côté de ladite première couche (105).

3. Procédé selon la revendication 2, dans lequel ladite première couche (105) comprend un premier polymère thermoplastique et ladite seconde couche comprend un second polymère thermoplastique différent dudit premier polymère thermoplastique.

4. Procédé selon l'une quelconque des revendications précédentes, dans lequel ladite ladite étape b) est une torsion, et dans lequel ledit filament imprimable en 3D (2) est une hélice.

5. Procédé selon l'une quelconque des revendications précédentes, dans lequel ledit filament imprimable en 3D (2) est un tube.

6. Procédé selon la revendication 5, dans lequel la bande allongée (1) a un premier bord et un second bord, le premier bord étant opposé au second bord le long de la première extension longitudinale (L1), ledit procédé comprenant en outre une étape b') consistant à faire adhérer ledit premier bord audit second bord, dans lequel une étape b') se produit avant une étape c).

7. Procédé selon l'une quelconque des revendications précédentes, dans lequel ledit procédé comprend en outre une étape a') consistant à sécher ladite au moins une bande allongée (1), dans lequel ladite ladite étape a') se produit avant ou simultanément à l'étape a).

8. Procédé selon l'une quelconque des revendications précédentes, dans lequel ledit procédé comprend en outre l'étape a‴) consistant à fournir une feuille comprenant un matériau imprimable en 3D, et à découper ladite feuille fournissant ainsi au moins une bande allongée (1) dudit matériau imprimable en 3D, dans lequel une étape a") se produit avant l'étape a).

9. Procédé selon l'une quelconque des revendications précédentes, dans lequel ladite première extension longitudinale (L1) de ladite au moins une bande allongée (1) est comprise la plage allant de 10 cm à 100 m, ladite première extension transversale (W1) de ladite au moins une bande allongée (1) est comprise dans la plage allant de 1 mm à 4 cm, et ladite première hauteur (T1) de ladite au moins une bande allongée (1) est égale ou inférieure à 1 mm.

10. Procédé selon l'une quelconque des revendications précédentes, dans lequel ladite seconde extension longitudinale (L2) dudit filament imprimable en 3D (2) est comprise dans la plage allant de 10 cm à 100 m, ladite seconde extension transversale (W2) dudit filament imprimable en 3D (2) est comprise dans la plage allant de 1 mm à 5 mm, et la seconde hauteur (T2) dudit filament imprimable en 3D est comprise dans la plage allant de 1 mm à 5 mm.

11. Filament imprimable en 3D (2) permettant de fabriquer un article en 3D au moyen d'une modélisation par dépôt en fusion, ledit filament imprimable en 3D comprenant un matériau imprimable en 3D sous la forme d'au moins une bande allongée (1) ayant une première extension longitudinale (L1), une première extension transversale (W1) étant sensiblement perpendiculaire à ladite première extension longitudinale (L1) et une première hauteur (T1) étant sensiblement perpendiculaire à ladite première extension longitudinale (L1) et à ladite première extension transversale (W1), ledit matériau imprimable en 3D comprenant au moins un polymère thermoplastique ;
dans lequel ledit matériau imprimable en 3D a été façonné, au moyen d'au moins l'un parmi une torsion et un enroulement autour d'un axe parallèle à la première extension longitudinale (L1), et dans lequel ledit filament imprimable en 3D a une seconde extension longitudinale (L2), une seconde extension transversale (W2) étant sensiblement perpendiculaire à ladite seconde extension longitudinale (L2) et une seconde hauteur (T2) étant sensiblement perpendiculaire à ladite seconde extension longitudinale (L2) et à ladite seconde extension transversale (W2).

12. Imprimante 3D (400) permettant de fabriquer un article en 3D en exécutant le procédé selon l'une quelconque des revendications 1 à 10, ladite imprimante 3D (400) comprenant un outil pour réaliser l'étape b).

13. Article en 3D fabriqué par le procédé selon l'une quelconque des revendications 1 à 10.

14. Dispositif d'éclairage comprenant un article en 3D selon la revendication 13 et une source lumineuse (000) permettant de fournir une lumière de source lumineuse.
